## Europäisches Patentamt

## European Patent Office

## Office européen des brevets

(11) Numéro de publication: **0 250 275**
**B1**

## FASCICULE DE BREVET EUROPEEN

(45) Date de publication du fascicule du brevet:
**06.06.90**

(51) Int. Cl.⁵: **G01P 3/48**

(21) Numéro de dépôt: **87400732.1**

(22) Date de dépôt: **03.04.87**

(54) Palier ou roulement à capteur d'informations.

(30) Priorité: **10.06.86 FR 8608348**

(43) Date de publication de la demande:
**23.12.87 Bulletin 87/52**

(45) Mention de la délivrance du brevet:
**06.06.90 Bulletin 90/23**

(84) Etats contractants désignés:
**AT BE DE GB IT SE**

(56) Documents cités:
**DE-A- 975 788**
**FR-A- 2 058 704**
**FR-A- 2 418 442**
**US-A- 3 742 243**
**US-A- 4 167 734**

(73) Titulaire: **S.N.R. ROULEMENTS, Boîte Postale 17 1, rue des Usines, F-74010 Annecy Cédex(FR)**

(72) Inventeur: **Guers, Roger, 23, Chemin des Amarantes, F-74600 Seynod(FR)**
Inventeur: **Godard, Georges, F-74330 Poisy Chef-Lieu(FR)**

(74) Mandataire: **Ernst-Schonberg, Michel, R.N.U.R. S. 0804 B.P. 103 8 & 10, avenue Emile-Zola, F-92109 Boulogne Billancourt(FR)**

ACTORUM AG

## Description

L'invention concerne un palier ou roulement à capteur d'informations du type comportant un élément fixe portant un dispositif capteur de champ magnétique et un élément tournant portant un anneau aimanté multipolaire disposé coaxialement audit élément tournant et séparé du dispositif capteur par un entrefer.

Le développement des automatismes exige actuellement la mesure précise de la vitesse de rotation et des déplacements angulaires des organes mécaniques.

On connaît par la publication FR-A 2 565 045 un dispositif pour la détection de la position angulaire d'un rotor constitué par:
- un disque monté coaxialement sur un arbre tournant et comprenant une face radiale sur laquelle sont fixés des aimants permanents de polarité alternativement inversée et produisant un champ magnétique,
- les capteurs de proximité à effet HALL disposés au voisinage de ladite face radiale et portés par une structure du stator coaxiale à l'arbre tournant, angulairement ajustable et aptes à détecter la composante axiale dudit champ.

La publication FR-A 2 568 377 décrit de manière similaire un capteur de vitesse de machine tournante.

La publication FR-A 2 418 442 décrit un codeur rotatif constitué par des sections magnétiques formées à la surface d'un tambour ou d'un disque.

La publication US-A 3 742 243 décrit un générateur de signaux dans lequel l'élément tournant porte un anneau multipôle monté à déplacement devant un capteur à effet HALL.

Lorsqu'un tel dispositif est monté dans une machine tournante son fonctionnement peut être perturbé par les champs magnétiques induits dans le stator ou dans le rotor.

Le manque de précision d'assemblage de la machine conduit parfois au montage d'aimants produisant des champs relativement intenses (plusieurs centaines de Gauss) susceptibles de perturber l'environnement ou de capter des particules métalliques.

L'intégration des éléments directement dans une machine tournante conduit à des produits supportant une gamme de température étendue (−40 à + 150°C) qui interdit l'utilisation de nombreux composants traditionnels.

L'invention a donc pour objet de faciliter la réalisation d'un montage tachymétrique de mesure de la vitesse de rotation d'un élément tournant ou d'un dispositif détecteur de position angulaire d'un élément de palier ou de roulement.

Selon l'invention, l'aimant est formé dans un anneau métallique en alliage traité (Fe - Co - Cr - V par exemple) qui permet une aimantation multipôle pour y être logé dans une bague non magnétique portée par l'élément tournant et est séparé du dispositif capteur par un entrefer axial ou radial compris entre 0,1 et 1,5 mm.

Le dispositif ainsi réalisé peut être aisément intégré dans un palier ou dans un roulement dont les éléments possèdent une bonne précision mécanique et une protection suffisante contre les agents extérieurs favorables à conférer au capteur la fiabilité nécessaire.

L'invention sera mieux comprise à la lecture de la description faite en référence au dessin annexé dans lequel:

- la figure 1 est une représentation schématique de l'anneau à aimants curvilignes associé à un capteur;
- la figure 2a est une représentation schématique de l'anneau à aimants curvilignes associé à deux capteurs;
- la figure 2b est une représentation schématique de l'anneau curviligne associé à 3 capteurs pour réaliser un dispositif détecteur de position angulaire;
- la figure 3 est une représentation schématique d'un tronçon d'anneau à aimants rectilignes;
- la figure 4 est une représentation des signaux obtenus avec la combinaison aimant-capteur représentée à la figure 1;
- la figure 5 est une représentation des signaux élémentaires et résultants obtenus avec la combinaison aimant-capteurs représentée à la figure 2a;
- les figures 6 et 7 sont des vues en coupe axiale d'un roulement dont la bague intérieure porte un anneau aimanté et dont la bague extérieure porte au moins un capteur;
- la figure 8 est une représentation schématique d'un arbre portant l'anneau aimanté tournant devant un capteur solidaire d'un carter fixe.

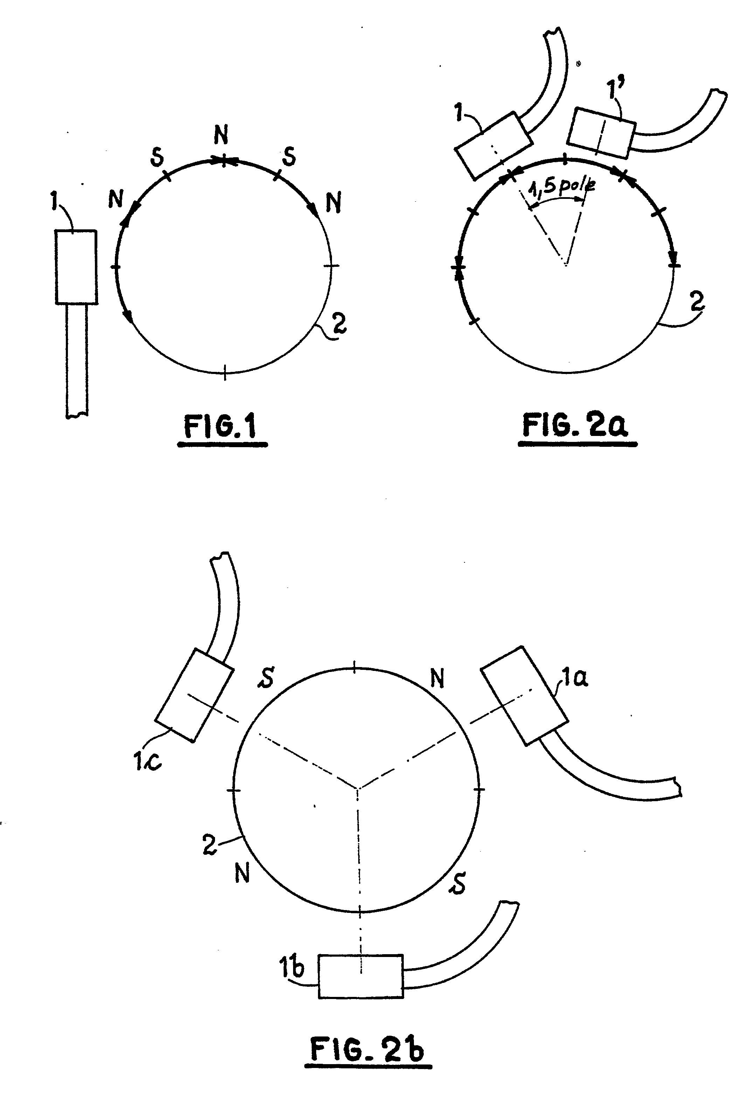

La figure 1 schématise le fonctionnement d'un ensemble aimant-capteur de champ magnétique.

Un capteur 1 de proximité à effet HALL ou magnétorésistance, avec électronique de traitement incorporée et sortie digitale, fonctionnant dans une plage de - 40° à + 150° C.

Le capteur est sensible à des champs magnétiques faibles (20 à 30 Gauss environ) et délivre un signal dont le signe s'inverse lorsque le champ magnétique dépasse une valeur de seuil constatée par exemple par suite d'un changement de direction du champ.

La sensibilité du capteur autorise l'emploi d'un anneau aimanté 2 multipôles à faible champ coercitif (quelques centaines d'Oersted formé, à titre d'exemple dans un anneau torique fendu en alliage traité de Fer, Chrome, Cobalt, Vanadium...

A titre d'exemple, l'anneau est formé par un fil de 1 mm de diamètre dont la constitution permet son utilisation dans une plage de températures de - 50° à + 200° C dans les conditions d'utilisation sévères des ensembles mécaniques.

La répartition du champ magnétique est assurée par des aimants particuliers de 4 à 7 mm de longueur par exemple.

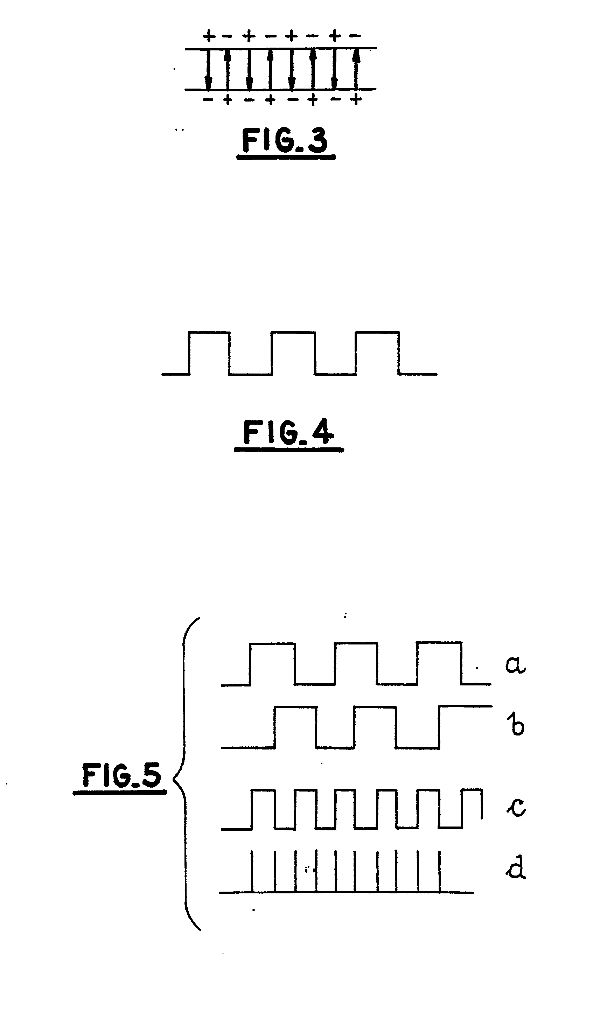

La figure 2a schématise le fonctionnement d'un ensemble dont l'aimant 2 est associé à deux capteurs 1, 1', écartés angulairement par un intervalle de n + 0,5 n dans lequel n est la longueur d'un aimant particulaire. Les signaux obtenus sont représentés figure 5 a, ...

Cette disposition permet de doubler le nombre de signaux de sortie et de déceler le défaut de fonctionnement de l'un des capteurs par l'observation de la modification des signaux délivrés.

Cette disposition des capteurs qui donne des signaux déphasés de 90° électrique permet en outre, la discrimination du sens de rotation.

En utilisant les différents fronts de montée et de descente des signaux, il est possible d'obtenir une multiplication par 2 du nombre d'impulsions par tour.

La figure 2b schématise l'anneau curviligne associé à 3 capteurs 1a, 1b, 1c pour réaliser un détecteur de position angulaire applicable à titre d'exemple à la commutation électronique de machines tournantes, tout autre type de réalisation pouvant être envisagé.

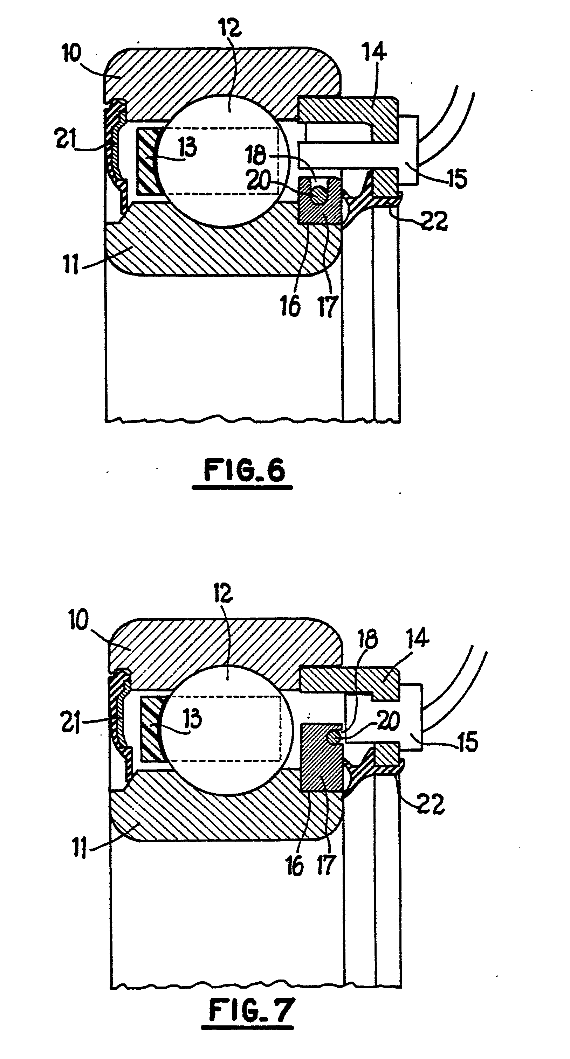

Les figures 6 et 7 sont des vues en coupe d'un roulement à billes qui possède une bague extérieure 10 et une bague intérieure 11 susceptibles d'être au choix fixe ou tournante en fonction du montage utilisé.

Les bagues 10 et 11 possèdent des chemins de roulement pour des corps roulants 12 disposés dans une cage 13 qui en assure la retenue et le positionnement angulaire.

La bague extérieure 10 supposée fixe porte un joint d'étanchéité à lèvre radiale en contact avec la bague intérieure 11 et un déflecteur 14 sur lequel est fixé le capteur 15.

La bague intérieure 11 supposée tournante possède une portée de montage 16 d'une bague 17 en matériau non magnétique immobilisée en rotation par collage, emmanchement à force ou par tout autre moyen. La bague 17 possède une gorge 18 dont l'ouverture radiale (figure 6) ou axiale (figure 7) est séparée du capteur 15 par un entrefer compris entre 0,1 et 1,5 mm en fonction de la taille du roulement.

Dans la gorge 18 est monté un anneau magnétique fendu 20, formé ainsi que cela vient d'être précisé dans un fil d'alliage métallique qui permet une aimantation à aimants particuliers.

La bague fixe 10 porte des joints d'étanchéité 21, 22 conventionnels constitués par des joints dont l'un 21 est emboîté dans une gorge de la bague 10 et dont l'autre 22 est monté sur une arête d'accrochage du déflecteur 14. Le joint 22 et le déflecteur 14 assurent ainsi la protection du capteur contre les agents extérieurs.

Les joints 21, 22 sont respectivement munis de lèvres d'étanchéité radiale et axiales en contact frottant sur la bague tournante 11 et/ou sur la bague 17 porte-aimant.

L'agencement proposé capteur-aimant n'engendre ainsi aucun champ magnétique décelable sur le roulement et réciproquement la structure acier du roulement protège l'agencement précité des champs magnétiques parasites extérieurs.

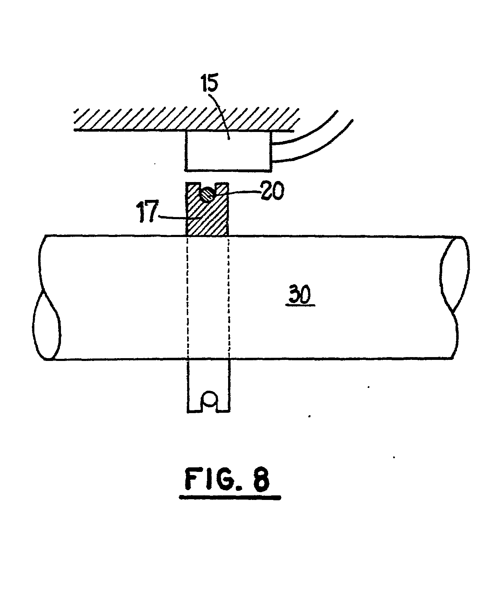

La figure 8 illustre l'agencement capteur-aimant destiné à la mesure de la vitesse de rotation d'un arbre tournant 30.

La bague 17 porte-aimant est dans ce cas rigidement fixée à l'arbre 30 et tourne devant le dispositif capteur monté sur un carter.

Ce type de montage est applicable aux ensembles utilisant des paliers ou roulements de taille réduite interdisant les montages illustrés par les figures 6, 7, que l'on rencontre dans l'industrie de l'électroménager.

**Revendications**

1. Palier ou roulement à capteur d'informations du type comportant un élément fixe (10) portant au moins un dispositif capteur (15) de champ magnétique et un élément tournant (11, 30) portant un anneau (20) aimanté multipolaire disposé coaxialement audit élément tournant (11, 30) et séparé du dispositif capteur (15) par un entrefer, caractérisé par le fait que l'aimant est formé dans un anneau métallique en alliage traité (Fe - Co - Cr - V, par exemple) qui permet une aimantation multipôle pour y être logé dans une bague (17) non magnétique portée par l'élément tournant (11, 30) et est séparé du dispositif capteur (15) par un entrefer axial ou radial compris entre 0,1 et 1,5 mm.

2. Palier selon la revendication 1, caractérisé par le fait que la bague (17) porte-aimant est fixée sur la bague (11) tournante d'un roulement et est monté à défilement devant un dispositif capteur (15) solidaire d'un déflecteur (14) ajustable monté sur la bague (10) fixe du roulement.

3. Palier selon la revendication 2, caractérisé par le fait que le déflecteur (14) porte une arête d'accrochage d'un joint (22) d'étanchéité à lèvre axiale au contact de la bague (17) porte-aimant.

**Patentansprüche**

1. Lager mit Sensor, welcher ein feststehendes Teil (10) aufweist, das wenigstens eine Magnetfeld-Sensoranordnung (15) trägt und ein drehendes Teil (11, 30) aufweist, das einen mehrpoligen magnetisierten Ring (20) trägt, der das drehende Teil (11, 30) koaxial umgibt und von der Sensoranordnung (15) durch einen Spalt getrennt ist, dadurch gekennzeichnet, daß der Magnet die Form eines metallischen Ringes aus einer vergüteten Legierung (z.B. Fe - Co - Cr - V) aufweist, die eine mehrpolige Magnetisierung erlaubt, um so in einen nicht-magnetischen Ring (17) eingesetzt zu werden, der vom drehenden Teil (11, 30) getragen wird, und daß er von der Sensoranordnung (15) durch einen radialen oder axialen Spalt getrennt ist, dessen Größe zwischen 0,1 mm und 1,5 mm liegt.

2. Lager nach Anspruch 1, dadurch gekennzeichnet, daß der den Magneten tragende Ring (17) am drehenden Ring (11) mittels eines Lagers befestigt ist und derart angeordnet ist, daß er an einer Sensoranordnung (15) vorbeiläuft, die fest mit einem Deflektor (14) verbunden ist, der einstellbar am feststehenden Ring (10) des Lagers angeordnet ist.

3. Lager nach Anspruch 2, dadurch gekennzeichnet, daß der Deflektor (14) eine Aufhängekante für eine Dichtung (22) aufweist, deren axiale Lippe mit dem den Magneten tragenden Ring (17) in Berührung steht.

## Claims

1. A bearing arrangement or rolling bearing assembly with information pick-up of the type comprising a fixed element (10) carrying at least one magnetic field pick-up device (15) and a rotary element (11, 30) carrying a multi-polar magnetised ring (20) disposed coaxially with respect to said rotary element (11, 30) and separated from the pick-up device (15) by an air gap, characterised in that the magnet is formed in a metal ring of treated alloy (for example Fe - Co - Cr - V) which permits multi-pole magnetisation to be accommodated therein in a non-magnetic ring (17) carried by the rotary element (11, 30), and is separated from the pick-up device (15) by an axial or radial air gap of between 0.1 and 1.5 mm.

2. A bearing arrangement according to claim 1 characterised in that the magnet-carrying ring (17) is fixed to the rotary race (11) of a rolling bearing assembly and is mounted in such a way as to pass before a pick-up device (15) fixed with respect to an adjustable deflector (14) mounted on the fixed race (10) of the rolling bearing assembly.

3. A bearing arrangement according to claim 2 characterised in that the deflector (14) carries a mounting edge for a sealing member (22) with an axial lip in contact with the magnet-carrying ring (17).

FIG.1

FIG. 2a

FIG. 2b

**FIG.3**

**FIG.4**

**FIG.5** {
a

b

c

d
}

FIG.6

FIG.7

**FIG. 8**